# EUROPEAN PATENT SPECIFICATION

(11) **EP 4 562 536 B1**
(45) Date of publication and mention of the grant of the patent: **02.12.2026**
(21) Application number: 23750704.1
(22) Date of filing: 24.07.2023
(51) Int. Cl.: G06K 7/10, G06K 7/14

(54) **METHOD OF READING AN OPTICALLY READABLE SECURITY ELEMENT**
VERFAHREN ZUM AUSLESEN EINES OPTISCH LESBAREN SICHERHEITSELEMENTS
PROCÉDÉ DE LECTURE D'UN ÉLÉMENT DE SÉCURITÉ LISIBLE OPTIQUEMENT

(30) Priority: 26.07.2022 GB 202210914
(43) Date of publication of application: 04.06.2025
(73) Proprietor: Quantum Base Limited, Stockport, Cheshire SK3 8AB (GB)
(72) Inventor: SPEED, Phillip, Stockport Cheshire SK3 8AB (GB); HOWARTH, David Ian, Stockport Cheshire SK3 8AB (GB); YOUNG, Robert James, Stockport Cheshire SK3 8AB (GB); DE LIMA ABREU, Daniel Campos, Stockport Cheshire SK3 8AB (GB)
(74) Representative: Appleyard Lees IP LLP
(86) International application number: PCT/GB2023/051947
(87) International publication number: WO 2024/023494

(56) References cited:
- WO-A1-2007/049774
- US-A1- 2013 140 356
- US-A1- 2020 193 107

## Description

### TECHNICAL FIELD

The present disclosure relates to a method of reading an optically readable security element using an image capturing device and an image capturing device for reading an optically readable security element.

### BACKGROUND

Optically readable security elements are known, for example, in the form of holograms, bar codes and 2D codes (such as QR codes). Optically readable security elements may enable security by, for instance, providing a unique identifier or by authenticating a device to which the element is attached.

In extracting an identity from the optical readable security element in order to, for example, authenticate a device to which the element is attached, it is necessary that the element is read accurately and reliably. It is also important that the extraction of the identity (or the extracted identity) is genuine.

Hence, there is a desire to provide a method of accurately, reliably and securely reading an optically readable security element, whereby an identity can be extracted from the element. Similarly, there is a desire to provide a device for performing the method. US2013140356 describes a camera positioning tool for symbology reading. WO2007049774 describes a code reader.

### SUMMARY

It is one aim of the present disclosure, amongst others, to provide a method of reading an optically readable security element using an image capturing device which at least partially obviates or mitigates at least some of the disadvantages of the prior art, whether identified herein or elsewhere, or to provide an alternative approach. For instance, it is an aim of embodiments of the invention to provide a method of reading an optically readable security element using an image capturing device that is accurate, reliable and secure.

According to the present invention there is provided a method of reading an optically readable security element using an image capturing device, as set forth in the appended claims. Other features of the invention will be apparent from the dependent claims and the description that follows.

According to a first aspect, there is provided a method of reading an optically readable security element using an image capturing device. The method comprises, by the image capturing device: reading the optically readable security element; displaying a modified verification target on a viewfinder of the image capturing device, wherein the modified verification target is modified with respect to a default verification target, and wherein the modified verification target is configured to guide a user to position the image capturing device for reading the optically readable security element differently compared with when the default verification target is displayed; and extracting an identity from the optically readable security element only if the optically readable security element is present in the modified verification target.

**The** method may further comprise determining a level of an optical characteristic proximal to the optically readable security element, the optical characteristic being distinct from the optically readable security element, wherein the default verification target is modified based on the determined level of the optical characteristic.

At least one of reading, displaying and extracting may be performed only if the optically readable security element is present in the modified verification target within a predetermined tolerance.

**The** modified verification target may be defined by at least one of: a position, an orientation, a shape and a size.

**The** method may further comprise repeating the displaying, optionally based on the optical characteristic.

**The** method may further comprise ending the method if the number of repeats is above a predetermined number.

**The** method may further comprise determining if an identity has been previously extracted, wherein the default verification target is modified only if no identity has previously been extracted.

**The** method may further comprise determining if an identity has been previously extracted, wherein the default verification target is modified only if an identity has previously been extracted.

**The** method may further comprise if an identity has been previously extracted, comparing the extracted identity with a previously extracted identity; and accepting the reading of the optically readable security element only if the difference between the extracted identity and the previously extracted identity is greater than a predetermined difference.

**The** optically readable security element may comprise one or more optical emitters arranged to be read via emission radiation emitted from the one or more optical emitters, and optionally arranged to be excited by excitation radiation, optionally from the image capturing device.

The optical characteristic may be separate from the radiation emitted from the one or more optical emitters.

The method may further comprise augmenting a display of the image capturing device with additional content for facilitating the reading, the augmented additional content being applied to one, more, or a combination of: the display, in relation to one or more of the optically readable security element, and the modified verification target and/or the default verification target; the optically readable security element; the modified verification target and/or the default verification target.

The augmenting (which may include gamification) may at least partially disguise from the user one, more, or a combination of: the reading of the optically readable security element; the displaying of the modified verification target; and the extracting of the identity.

According to a second aspect, there is provided an image capturing device for reading an optically readable security element. The image capturing device comprises: a reader configured to read the optically readable security element; a display configured to display a modified verification target on a viewfinder of the image capturing device, wherein the modified verification target is modified with respect to a default verification target, and wherein the modified verification target is configured to guide a user to position the image capturing device for reading the optically readable security element differently compared with when the default verification target is displayed; and an extraction unit configured to extract an identity from the optically readable security element only if the optically readable security element is present in the modified verification target.

### BRIEF DESCRIPTION OF DRAWINGS

For a better understanding of the invention, and to show how exemplary embodiments of the same may be brought into effect, reference will be made, by way of example only, to the accompanying diagrammatic Figures, in which:
Figure 1 schematically depicts a method of reading an optically readable security element using an image capturing device according to an exemplary embodiment;
Figure 2 schematically depicts the image capturing device according to an exemplary embodiment;
Figure 3 schematically depicts scenarios in which different levels of specular reflection are determined according to an exemplary embodiment;
Figure 4 schematically depicts the image capturing device displaying modified verification targets according to an exemplary embodiment;
Figure 5 schematically depicts the image capturing device displaying modified verification targets according to a related exemplary embodiment; and
Figure 6 schematically depicts the configuration of the image capturing device according to an exemplary embodiment.

### DETAILED DESCRIPTION

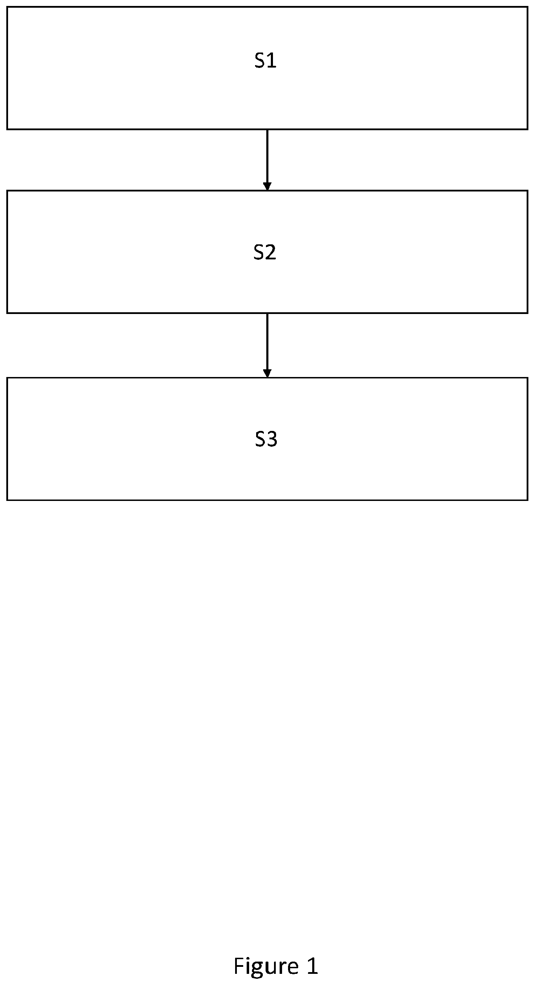

Figure 1 schematically depicts a method of reading an optically readable security element using an image capturing device according to an exemplary embodiment. The method comprises steps S1, S2 and S3, which are described in more detail below.

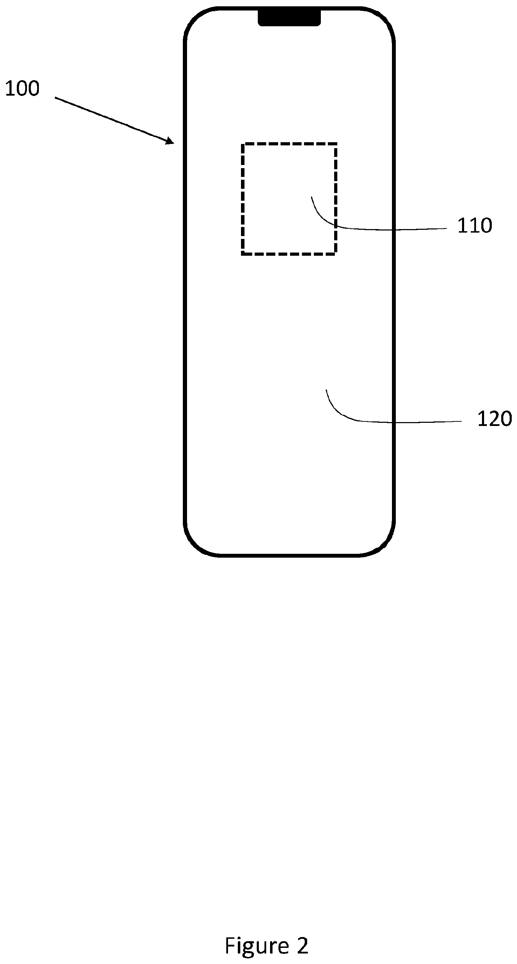

Figure 2 schematically depicts the image capturing device 100 according to an exemplary embodiment. The image capturing device may be a terminal device, such as a smart phone, including a display (e.g., a viewfinder 120). The image capturing device may be configured to display a verification target 110 on or as part of this display.

An optically readable security element may be a hologram, bar code, QR code or similar. The optically readable security element comprises at least one optical emitter. The optically readable security element is arranged to be read via emission radiation emitted from at least one optical emitter. Typically, the at least one optical emitter is arranged to be excited by excitation radiation. The excitation radiation is typically emitted from the image capturing device 100 shown in Figure 2. Emitting the excitation radiation from the image capturing device 100 may advantageously allow convenient control of excitation of the at least one optical emitter and, hence, control of the optically readable security element.

As shown in Figure 1, the method comprises reading S1 the optically readable security element. Reading may mean sensing or scanning. Reading S1 does not necessarily mean extraction of an identity. Reading S1 may be performed using sensors, such as image or video sensors.

The method also comprises determining S2 a level of an optical characteristic proximal to the optically readable security element - i.e., determined or determinable in the reading S1 of the optically readable security element 200, for example by the same sensor or sensors, in a same (single) field of view of the sensor or sensors or the image capturing device 100 in general. The optical characteristic may be, for example, resolution/focus or specular reflection. The optical characteristic is distinct from the optically readable security element. Specifically, the optical characteristic is distinct from the readable portion of the optically readable (e.g., the optical characteristic and the readable portion of the optically readable security element are defined by different frequencies of electromagnetic radiation). Proximal to the optically readable security element means next to, on or in the element but not emission of or from the element itself and determined or determinable in the reading S1 of the optically readable security element 200, for example by the same sensor or sensors, in a same (single) field of view of the sensor or sensors or the image capturing device 100 in general. In other words, the optical characteristic is separate from the radiation emitted from the optical emitter(s). The optical characteristic may be separated from the emitted radiation, for example, by selectively measuring those areas whose intensity value fall within a given range or for which the colour temperature has a specific value.

The method also comprises extracting S3 an identity from the optically readable security element. The identify is extracted from the element only if the level of the optical characteristic is within a predetermined range. In this way, the method ensures accurate, reliable and secure reading an optically readable security element, as elaborated on below. The level of the optical characteristic may refer to a qualitative or quantitative measure of the optical characteristic. For example, the optical characteristic may be a measurement of luminous intensity.

Extracting S3 the identity from the element only if the level of the optical characteristic is within a predetermined range may mean extracting the identity only if the level of the optical characteristic is below a first predetermined threshold. For example, the identity may only be extracted if a level of specular reflection proximal to the optically readable security element is below the first predetermined threshold. Advantageously, accurate extraction of the identity is ensured by performing the extraction in the absence of excessive specular refection (i.e., a level of specular reflection above the first predetermined threshold).

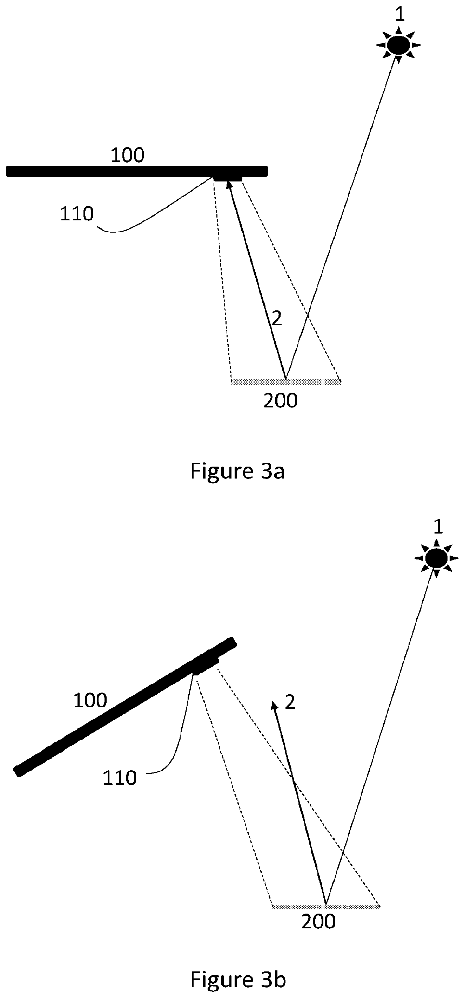

Figure 3 schematically depicts scenarios in which different levels of specular reflection are determined according to an exemplary embodiment. In Figure 3a, the image capturing device 100 of Figure 2 is shown reading the optically readable security element 200. A source of specular illumination 1 (in this case the sun or other ambient light, but it may be any light source) of the optically readable security element results in a ray of specular reflection 2. In the case of Figure 3a, the level of specular reflection is below the first predetermined threshold, meaning that the identity is extracted. In the case of Figure 3b, the level of specular reflection is above the first predetermined threshold, meaning that the identity is not extracted. In the example in Figures 3a and 3b, the specular reflection 2 is proximal to the optically readable security element 200, in that the specular reflection 2 reflects off the optically readable security element 200. In another example, the specular reflection 2 (or other optical characteristic) may be proximal to the optically readable security element 200, in that the specular reflection 2 (or other optical characteristic) is present near to (but not in or on) the element.

Extracting S3 the identity from the element 200 only if the level of the optical characteristic is within a predetermined range may mean extracting the identity only if the level of the optical characteristic is above a second predetermined threshold. For example, the identity may only be extracted if a level of specular reflection specular reflection proximal to the optically readable security element 200 is above the second predetermined threshold. Advantageously, security is enhanced by only extracting the identity if the level of specular reflection is above the second predetermined threshold, because very low levels or a complete lack of specular reflection could be indicative of a replay attack. In other words, the presence of (and changes in) specular reflection may be indicative of a live reading, with changing light conditions, as opposed to reuse of a static or passive imitation of the optical characteristic.

The first and/or second predetermined threshold may be based on a previous determination of a level of the optical characteristic. For example, an extraction of the identity may be performed in a controlled environment to establish a maximum level of specular reflection at which the identity can be accurately extracted, and the first predetermined threshold may be based on this maximum level.

The verification target 110 mentioned earlier in relation to Figure 2 is typically an area of the display (e.g., viewfinder 120) through which the reading S1, determining S2 and extracting S3 described in relation to Figure 1 may be performed. The verification target 110 may defined by a position and/or an orientation and/or a shape and/or a size. The verification target 110 advantageously guides a user to position the image capturing device 100 such that the optically readable security element 200 can be read.

At least one of reading S1, determining S2 and extracting S3 may be performed only if the optically readable security element 200 is present in a displayed verification target 110 or present in the displayed verification target 110 within a predetermined tolerance (e.g., 90% of the optically readable security element 200 by surface area is present within the verification target 110). In this way, efficiency of the method and the image capturing device 100 are facilitated, because one or more steps of the method S1, S2, S3 only take place when they are not likely to be unreliable or inaccurate due to the position of the optically readable element 200 relative to the image capturing device 100 prohibiting accurate reading S1 and/or determining S2 and/or extracting S2.

The method shown in Figure 1 may further comprise modifying the verification target 110 and repeating the displaying of the verification target 110 if the level of the optical characteristic is outside the predetermined range. Advantageously, in this way the user is guided to better position the image capturing device 100 for (e.g., more accurately) reading the optically readable security element 200. The repetition may be undertaken for different reasons, for example to have multiple readings, to check the identity or obtain different perspectives or angles (a general relative repositioning of the optically readable security element 200 and image capturing device 100) of the reading S1.

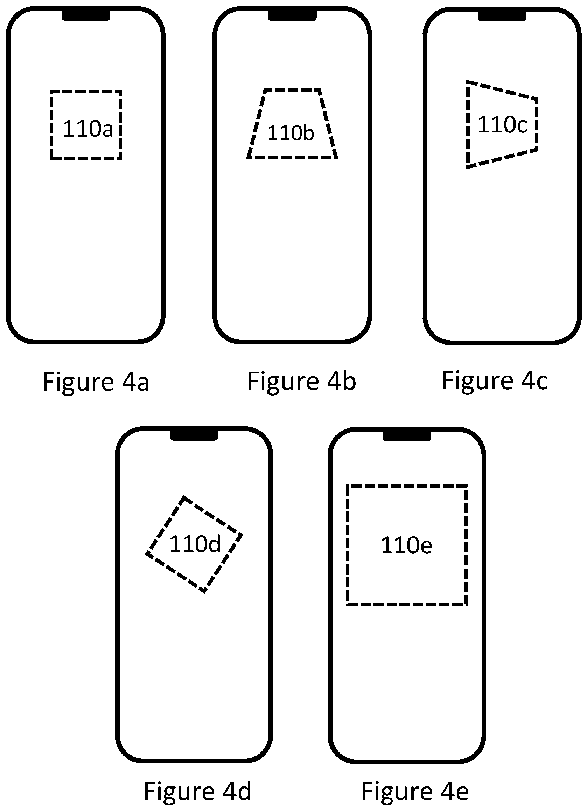

Figure 4 schematically depicts the image capturing device 100 displaying modified verification targets according to an exemplary embodiment. Figure 4a shows an unmodified verification target 110a. Figures 4b to 4e show the unmodified verification target 110a modified in respect of their pitch, roll, yaw and size, respectively. For example, the verification target 110a is typically modified as shown in Figures 4b to 4d if a level of specular reflection is determined to be outside the predetermined range. By modifying the verification target 110 by changing the pitch, roll or yaw, the user is guided to position the image capturing device 100 in a position likely to result in a different level of specular reflection, for example, compared with the position in which the user is guided to position the image capturing device 100 prior to the modification of the verification target 110. In contrast, the verification target 110a is typically modified as shown in Figures 4e if a level of resolution/focus is determined to be outside the predetermined range. By modifying the verification target 110 by changing its size, the user is guided to position the image capturing device 100 in a position likely to result in a different level of resolution, for example, compared with the position in which the user is guided to position the image capturing device 100 prior to the modification of the verification target 110. The verification target 110a may be modified based on a combination of changes with respect to pitch, roll, yaw and size or any other geometrical characteristic or the position of the verification target 110.

If the number of repeats is above a predetermined number, the method may further comprise ending the method. Advantageously, in this way repeated illegitimate attempts to extract the identity are inhibited.

The method comprises displaying S2 the modified verification target. The modified verification target is as described above in relation to Figure 4. The modified verification target is, as implicit in the earlier description of modified verification targets, modified with respect a default (unmodified) verification target (e.g., the verification target 110a shown in Figure 4a). Thus, the default verification target may be modified based on the determined level of the optical characteristic as described above.

The step of extracting S3 comprises extracting an identity from the optically readable security element 200 only if the optically readable security element 200 is present in the modified verification target. Advantageously, in this way the user is guided to position the image capturing device 100 for reading the optically readable security element 200 differently compared with when the default verification target is displayed, thereby making fraudulent extraction of the identity more difficult. In other words, by including step of extraction contingent on the presence of the optically readable security element 200 in the modified verification target, an improved security protocol is provided.

As above, at least one of reading S1, displaying S2 and extracting S3 may be performed only if the optically readable security element 200 is present in a displayed modified verification target or present in the displayed modified verification target within a predetermined tolerance (e.g., 90% of the optically readable security element 200 by surface area is present within the modified verification target) such that efficiency of the method and the image capturing device 100 are facilitated.

In the case of the method comprising determining S2 a level of an optical characteristic proximal to the optically readable security element 200 and displaying S2 the modified verification target, the method may further comprise repeating the displaying of the modified verification target based on the optical characteristic. For example, the modified verification target may be further modified based on the determined optical characteristic and the further modified verification target displayed if the optical characteristic is outside the predetermined range. In this way, accuracy and/or security of identity extraction is further enhanced as described above.

If the number of repeats is above a predetermined number, the method may further comprise ending the method. Advantageously, in this way repeated illegitimate attempts to extract the identity are inhibited.

The method may further comprise determining if an identity has been previously extracted, wherein the default verification target is modified only if no identity has previously been extracted. Therefore, unnecessary modification is not performed.

Alternatively, the method may further comprise determining if an identity has been previously extracted, wherein the default verification target is modified only if an identity has been previously extracted. Therefore, the user is encouraged to reposition the image capturing device 100 such that, depending on the properties of the optically readable security element 200 and/or its construction, a different identity may be extracted. For example, in the case of an optically readable security element 200 whose optical emission has an angular dependency, displaying the modified verification target facilitates extraction of additional identity information, thereby providing further security. Repositioning the image capturing device 100 is advantageous even if the extractable identity is constant (e.g., not dependent on the position of the image capturing device 100), because a second extraction of the same identity information may act as confirmation of authenticity.

The method may further comprise, if an identity has been previously extracted, comparing the extracted identity with at least one previously extracted identity. For example, corresponding pixels may be compared. If there is more than one previously extracted identity an average value of a property of the previously extracted pixels may be compared with a value of the same property of the extracted pixel. The reading of the optically readable security element 200 may be accepted only if the difference between the extracted identity and the previously extracted identity is greater than a predetermined difference. For example, a hamming distance may be calculated for the extracted identity and one previously extracted identity and compared with a predetermined hamming distance, whereby the calculated hamming distance is less than the predetermined hamming distance the reading of the optically readable security element 200 is not accepted. Advantageously, this feature reduces the chances of a replay attack (a type of attack in which repeat image data is used), for example.

In Figures 4a to 4d, the verification target 110a-110d is generally depicted as a deliberate, distinct and/or isolated (default and/or) modified verification target, for example, where the default and/or modified verification target is the only user interface feature that is displayed or is very prominent. This means that the user is very clearly aware of the default and/or modified verification targets, and in particular the modifications. This awareness might give the user very clear direction and avoid distractions. That is, the viewer is very clearly aware that they are using the target to read the optically readable security element 200. Without this awareness, the display may be so simple that the user is not sure what actions to take, if any. Additionally, this distinct target might also alert the user to some form of security check that is being undertaken or some form of authentication. A user may not want to go through such a process for time or enjoyment reasons. An overall system owner or administrator may not want the user or other party to know that there is such a process, because it might deter the user from going through the process or may highlight to a user or third party that the process exists. Although subtle, this could give an interested party a potential way of identifying or circumventing the process, either due to the time taken or simply due to the process being distinctly visible.

A way of avoiding or overcoming these problems is subtle yet powerful. An approach might comprise augmenting a display of the image capturing 100 device with additional content for facilitating the reading S1. Facilitating the reading S1 might mean that the reading S1 is easier for the user to do, for example by being provided by guides or visual cues. Facilitating might be from the perspective of the overall system or method, allowing the reading S1 to be undertaken in some improved way, for example more discreetly or more accurately or repeatedly, and so on.

The augmented additional content is typically applied to one, more, or a combination of: the display, in relation to one or more of the optically readable security element, and the modified verification target and/or the default verification target; the optically readable security element; the modified verification target and/or the default verification target. In at least solving some of the problems above, the augmenting at least partially assists or guides the user in the reading process. Alternatively or additionally, the augmenting might disguise from the user one, more, or a combination of: the reading S1 of the optically readable security element 200; the displaying S2 of the modified verification target; the extracting S3 of the identity. The augmentation might be via the user of images or video and be relatively passive or interactive. A gaming element might also improve the overall method, for example making the user more engaged with the reading S1, and/or disguising from the user one or more parts of the method.

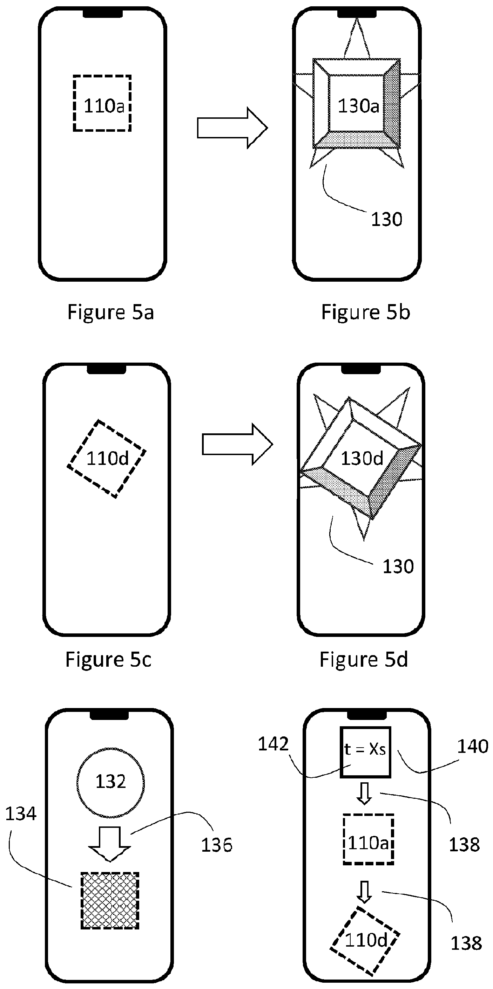

Figure 5a shows a default or modified verification target, for example the modified verification target 110a of Figure 4a. The verification target 110a is generally depicted as a deliberate, distinct and/or isolated target. For example, target is the only user interface feature that is displayed or is very prominent. Figure 5b shows that, according to an improved example, augmentation of the display with additional content 130 is implemented. The content 130 still includes or defines a verification target 130a, but in comparison with verification target 110a of Figure 5a, the content 130 and verification target 130a is more interesting, engaging or simply disguises the fact that any target is present.

Figure 5c shows a default or modified verification target, for example the modified verification target 110d of Figure 4d. The verification target 110d is generally depicted as a deliberate, distinct and/or isolated target. For example, target is the only user interface feature that is displayed or is very prominent. The target 110d is effectively an in-plane rotation of the target 110a of Figure 4a or 5a. Figure 5d shows that, according to an improved example, augmentation of the display with additional content 130 is implemented. The content 130 still includes or defines a verification target 130d, but in comparison with verification target 110d of Figure 5c, the content 130 and verification target 130d is more interesting, engaging or simply disguises the fact that any target is present. In Figure 5d, it will be appreciated that the content 130 and target 130d is effectively an in-plane rotation of the content 130 and target 130a of Figure 5b.

In comparison with a transition or repetition of the method from Figure 5a to 5c, in a transition or repetition of the method from Figure 5b to 5d, the user may be more engaged with, or disguised from, parts of the method, by way of content 130.

As with all augmentations described or defined here, this is just one example of how augmentation improves the methodology, and this is technically beneficial, from a faster or more accurate reading (via better user engagement or guiding), easier or faster repetition (via better user engagement or guiding or by the user simply not realising repetition is happening) or general disguising of the security checks that being implemented (by the user simply not realising repetition is happening).

Figures 5b and 5d are very simply examples of augmentation and augmentation of the target. It will be appreciated that far more elaborate augmentation may take place, depending on the application requirements.

Figure 5e shows that an optically readable security element 132 is visible in the display, but is augmented to appear as a ball 132. Relatedly, the verification target is augmented to appear as a net 134. The overall display, in relation to the optically readable security element 132, and the verification target 134, may be augmented with one or more arrows 136 to guide the user. A reading of the optically readable security element 132 may be undertaken when the ball is within the boundaries of the net. The position or shape of the net may change, for repeated modifications of the target 134 and readings. As will be appreciated, this method of reading is far more engaging for the user and/or disguises the user from any authentication process. Gamification improves the overall method.

Between Figures 4a and 4d (or, relatedly, Figures 5a and 5c, or 5b and 5d), a modification from a verification target 110a, 130a in one configuration to a verification target in another configuration 110d, 130d may take place in distinct, successive screens. However, this might also be improved. For example, Figure 5f shows such modified targets 110a, 110d, but on the same augmented display. Here, the augmentation might be viewed as including not one but two targets 110a, 110d. Also, a user may be encouraged, via augmented content arrows or guides 138, to move a displayed optically readable security element 140 between those targets 110a, 110d, for quick, precise and engaging repeated readings of that element 140 in different configurations. An augmentation of the element 140 may include a timer or clock to encourage the user to move between the targets 110a, 110d.

It will be appreciated that other examples are possible, and that the augmentation might be described in additional or alternative ways.

For example, a video overlay, or augmented reality projection, could be used to guide the user of an image capturing device (e.g., a smartphone) application (e.g., "app") to keep changing the projection (i.e., orientation or position) from which they make a reading of the element.

Multiple readings made during the method could be combined to filter out bad measurements (e.g., ones including unwanted reflections, or errors) and to increase the security of the measurement.

Some image capturing devices may not allow different flash (or, in general, illumination or excitation) levels to be selected. Therefore, incentivising the user to move the device relative to the optically readable security element would result in modulating the incident power (i.e., intensity) from a flash (or other illumination or excitation source) onto the optically readable security element. This may allow for changes in excitation-emission relationships to be assessed.

Some image capturing devices may have different (yet specific) minimum/maximum focal lengths - the described method, and related modifications of verification targets (e.g., encouraging movement between the device and the security element) would provide a way to acquire multiple captures and filter out the bad ones, irrespective of the need to know or control focal lengths. This could reduce the need to have device-specific profiles included in the reading software.

Additionally, different users bring different expectations on how to best use the device or method (e.g., via an app) and how to best read the optically readable security element. The methods described herein (e.g., modifications of targets and also repeated readings) allows for standardizing different user behaviour as a way of increasing the security of the measurement. As hinted at above, gamifying the reading experience also increases the likelihood of a user engagement with the method.

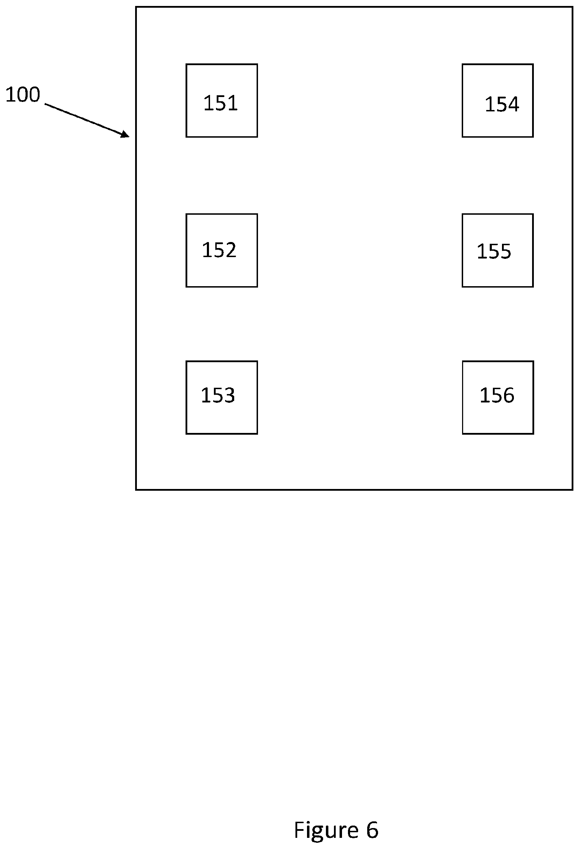

Referring back to a more general discussion of the concepts, Figure 6 schematically depicts a configuration of the image capturing device 100 according to an exemplary embodiment. The image capturing device 100 for reading the optically readable security element comprises a reader 151, a determination unit 152 and an extraction unit 153. The reader 151 is configured to read the optically readable security element, as described in relation to S1 of Figure 1. The determination unit 152 is configured to determine a level of an optical characteristic proximal to the optically readable security element 200, the optical characteristic being distinct from the optically readable security element 200, as described in relation to S2 of Figure 1. The extraction unit 153 is configured to extract an identity from the optically readable security element 200 as described in relation to S3 of Figure 1.

In addition to or in place of the determination unit 152, in some examples the image capturing device includes a display 154 configured to display the verification target/modified verification target on a viewfinder.

As mentioned above, the image capturing device 100 may comprise an optical emitter (not shown) for emitting excitation radiation, for example, via a light source, such as an LED and/or flash.

In one example, the extraction unit 153 is configured to extract the identity from the optically readable security element 200 only if the level of the optical characteristic is below a first predetermined threshold or above a second predetermined threshold and/or only if the optically readable security element is present in the modified verification target, as described in relation to Figure 1. The first and/or second predetermined threshold may be based on a previous determination of a level of the optical characteristic, as described in relation to Figure 1.

At least one of the reader 151, the determination unit 152 and/or the display and the extraction unit 153 may be configured to be operable only if the optically readable security element 200 is present in a displayed verification target 110 or present in the displayed verification target 110 within a predetermined tolerance.

The image capturing device 100 may comprise a modification unit 155 configured to modify the verification target 110 (e.g., default verification target), as described in relation to Figure 1 and Figure 4 (and Figure 5). The display 120 may be configured to repeat the displaying of the verification target 110 if the level of the optical characteristic is outside the predetermined range.

The image capturing device 100 may comprise a controller 156 configured to end the method if the number of repeats is above a predetermined number. The controller 156 may control operation of the other components of the image capturing device 100. For instance, the controller 156 may be configured to determine if an identity has previously been extracted and compare the extracted identity with the previously extracted identity as described in relation to the method.

In summary, the present disclosure has described a method and device that enable accurate, reliable and secure extraction of an identity from an optically readable security element.

Throughout this specification, the term "comprising" or "comprises" means including the component(s) specified but not to the exclusion of the presence of other components. The term "consisting essentially of" or "consists essentially of" means including the components specified but excluding other components except for materials present as impurities, unavoidable materials present as a result of processes used to provide the components, and components added for a purpose other than achieving the technical effect of the invention, such as colourants, and the like. The term "consisting of" or "consists of" means including the components specified but excluding other components.

Whenever appropriate, depending upon the context, the use of the term "comprises" or "comprising" may also be taken to include the meaning "consists essentially of" or "consisting essentially of", and also may also be taken to include the meaning "consists of" or "consisting of".

The optional features set out herein may be used either individually or in combination with each other where appropriate and particularly in the combinations as set out in the accompanying claims. The optional features for each aspect or exemplary embodiment of the invention, as set out herein are also applicable to all other aspects or exemplary embodiments of the invention, where appropriate.

All of the features disclosed in this specification (including any accompanying claims and drawings) may be combined in any combination, except combinations where at most some of such features steps are mutually exclusive.

## Claims

1. A method of reading an optically readable security element (200) using an image capturing device (100), the method comprising, by the image capturing device (100):
reading the optically readable security element (200);
displaying a modified verification target on a viewfinder (120) of the image capturing device (100), wherein the modified verification target is modified with respect to a default verification target, and wherein the modified verification target is configured to guide a user to position the image capturing device (100) for reading the optically readable security element (200) differently compared with when the default verification target is displayed; and
extracting an identity from the optically readable security element (200) only if the optically readable security element (200) is present in the modified verification target.

2. **The** method of claim 1, further comprising:
determining a level of an optical characteristic in the reading of the optically readable security element (200), the optical characteristic being distinct from the optically readable security element (200), wherein the default verification target is modified based on the determined level of the optical characteristic.

3. **The** method of any preceding claim, wherein at least one of reading, displaying and extracting is performed only if at least a predetermined proportion of the optically readable security element (200), by surface area, is present in the modified verification target.

4. The method of any preceding claim, wherein the modified verification target is defined by at least one of: a position, an orientation, a shape and a size.

5. The method of any one of claims 2 to 4 further comprising:
repeating the displaying based on the optical characteristic.

6. The method of claim 5, further comprising:
ending the method if the number of repeats is above a predetermined number.

7. **The** method of any preceding claim, further comprising:
if an identity has been previously extracted, comparing the extracted identity with a previously extracted identity; and
accepting the reading of the optically readable security element (200) only if the difference between the extracted identity and the previously extracted identity is greater than a predetermined difference.

8. **The** method of any preceding claim, wherein the optically readable security element (200) comprises one or more optical emitters arranged to be read via emission radiation emitted from the one or more optical emitters, and optionally arranged to be excited by excitation radiation, optionally from the image capturing device (100).

9. **The** method of claim 8 when dependent on claim 2, wherein the optical characteristic is separate from the radiation emitted from the one or more optical emitters.

10. **The** method of any preceding claim, further comprising augmenting a display (154) of the image capturing device (100) with additional content for facilitating the reading, the augmented additional content being applied to one, more, or a combination of:
the display (154), in relation to one or more of the optically readable security element (200), and the modified verification target and/or the default verification target;
the optically readable security element (200); and
the modified verification target and/or the default verification target.

11. **The** method of claim 10, wherein the augmenting at least partially disguises from the user one, more, or a combination of:
the reading of the optically readable security element (200);
the displaying of the modified verification target; and
the extracting of the identity.

12. An image capturing device (100) for reading an optically readable security element (200), the image capturing device (100) comprising:
a reader (151) configured to read the optically readable security element (200);
a display (154) configured to display a modified verification target on a viewfinder (120) of the image capturing device (100), wherein the modified verification target is modified with respect to a default verification target, and wherein the modified verification target is configured to guide a user to position the image capturing device (100) for reading the optically readable security element (200) differently compared with when the default verification target is displayed; and
an extraction unit (153) configured to extract an identity from the optically readable security element (200) only if the optically readable security element (200) is present in the modified verification target.

## Patentansprüche

1. Verfahren zum Lesen eines optisch lesbaren Sicherheitselements (200) unter Verwendung einer Bildaufnahmevorrichtung (100), wobei das Verfahren durch die Bildaufnahmevorrichtung (100) Folgendes umfasst:
Lesen des optisch lesbaren Sicherheitselements (200);
Anzeigen eines modifizierten Verifikationsziels auf einem Sucher (120) der Bildaufnahmevorrichtung (100), wobei das modifizierte Verifikationsziel in Bezug auf ein Standardverifikationsziel modifiziert ist und wobei das modifizierte Verifikationsziel dazu ausgelegt ist, einen Benutzer zu führen, die Bildaufnahmevorrichtung (100) zum Lesen des optisch lesbaren Sicherheitselements (200) unterschiedlich zu positionieren, als wenn das Standardverifikationsziel angezeigt wird; und
Extrahieren einer Identität aus dem optisch lesbaren Sicherheitselement (200) nur dann, wenn das optisch lesbare Sicherheitselement (200) in dem modifizierten Verifikationsziel vorhanden ist.

2. Verfahren nach Anspruch 1, das ferner Folgendes umfasst:
Bestimmen eines Pegels einer optischen Charakteristik beim Lesen des optisch lesbaren Sicherheitselements (200), wobei die optische Charakteristik von dem optisch lesbaren Sicherheitselement (200) verschieden ist, wobei das Standardverifikationsziel basierend auf dem bestimmten Pegel der optischen Charakteristik modifiziert wird.

3. Verfahren nach einem der vorhergehenden Ansprüche, wobei das Lesen und/oder Anzeigen und/oder Extrahieren nur durchgeführt wird, wenn mindestens ein vorbestimmter Anteil des optisch lesbaren Sicherheitselements (200) flächenmäßig in dem modifizierten Verifikationsziel vorhanden ist.

4. Verfahren nach einem der vorhergehenden Ansprüche, wobei das modifizierte Verifikationsziel durch eine Position und/oder eine Orientierung und/oder eine Form und/oder eine Größe definiert ist.

5. Verfahren nach einem der Ansprüche 2 bis 4, das ferner Folgendes umfasst:
Wiederholen der Anzeige basierend auf der optischen Charakteristik.

6. Verfahren nach Anspruch 5, das ferner Folgendes umfasst:
Beenden des Verfahrens, falls die Anzahl von Wiederholungen über einer vorbestimmten Anzahl liegt.

7. Verfahren nach einem der vorhergehenden Ansprüche, das ferner Folgendes umfasst:
falls eine Identität zuvor extrahiert wurde, Vergleichen der extrahierten Identität mit einer zuvor extrahierten Identität; und
Akzeptieren des Lesens des optisch lesbaren Sicherheitselements (200) nur dann, wenn die Differenz zwischen der extrahierten Identität und der zuvor extrahierten Identität größer als eine vorbestimmte Differenz ist.

8. Verfahren nach einem der vorhergehenden Ansprüche, wobei das optisch lesbare Sicherheitselement (200) einen oder mehrere optische Emitter umfasst, die dazu ausgelegt sind, über Emissionsstrahlung gelesen zu werden, die von dem einen oder den mehreren optischen Emittern emittiert wird, und optional dazu angeordnet sind, durch Anregungsstrahlung, optional von der Bilderfassungsvorrichtung (100), angeregt zu werden.

9. Verfahren nach Anspruch 8, wenn abhängig von Anspruch 2, wobei die optische Charakteristik von der Strahlung getrennt ist, die von dem einen oder den mehreren optischen Emittern emittiert wird.

10. Verfahren nach einem der vorhergehenden Ansprüche, das ferner das Erweitern einer Anzeige (154) der Bilderfassungsvorrichtung (100) mit zusätzlichem Inhalt zum Ermöglichen des Lesens umfasst, wobei der erweiterte zusätzliche Inhalt auf eines, mehrere oder eine Kombination aus Folgendem angewendet wird:
die Anzeige (154) in Bezug auf das optisch lesbare Sicherheitselement (200) und/oder das modifizierte Verifikationsziel und/oder das Standardverifikationsziel;
das optisch lesbare Sicherheitselement (200); und
das modifizierte Verifikationsziel und/oder das Standardverifikationsziel.

11. Verfahren nach Anspruch 10, wobei das Erweitern mindestens teilweise von dem Benutzer eines, mehrerer oder einer Kombination aus Folgendem verdeckt:
das Lesen des optisch lesbaren Sicherheitselements (200);
die Anzeige des geänderten Verifikationsziels; und
das Extrahieren der Identität.

12. Bildaufnahmevorrichtung (100) zum Lesen eines optisch lesbaren Sicherheitselements (200), wobei die Bildaufnahmevorrichtung (100) Folgendes umfasst:
einen Leser (151), der dazu ausgelegt ist, das optisch lesbare Sicherheitselement (200) zu lesen;
eine Anzeige (154), die dazu ausgelegt ist, ein modifiziertes Verifikationsziel auf einem Sucher (120) der Bildaufnahmevorrichtung (100) anzuzeigen, wobei das modifizierte Verifikationsziel in Bezug auf ein Standardverifikationsziel modifiziert ist und wobei das modifizierte Verifikationsziel dazu ausgelegt ist, einen Benutzer zu führen, die Bildaufnahmevorrichtung (100) zum Lesen des optisch lesbaren Sicherheitselements (200) unterschiedlich zu positionieren, als wenn das Standardverifikationsziel angezeigt wird; und
eine Extraktionseinheit (153), die dazu ausgelegt ist, eine Identität aus dem optisch lesbaren Sicherheitselement (200) nur dann zu extrahieren, wenn das optisch lesbare Sicherheitselement (200) in dem modifizierten Verifikationsziel vorhanden ist.

## Revendications

1. Procédé de lecture d'un élément de sécurité lisible optiquement (200) à l'aide d'un dispositif de capture d'image (100), le procédé comprenant, par le dispositif de capture d'image (100) :
la lecture de l'élément de sécurité lisible optiquement (200) ;
l'affichage d'une cible de vérification modifiée sur un viseur (120) du dispositif de capture d'image (100), la cible de vérification modifiée étant modifiée par rapport à une cible de vérification par défaut, et la cible de vérification modifiée étant configurée pour guider un utilisateur à positionner le dispositif de capture d'image (100) pour lire l'élément de sécurité lisible optiquement (200) différemment par rapport au moment où la cible de vérification par défaut est affichée ; et
l'extraction d'une identité de l'élément de sécurité lisible optiquement (200) uniquement si l'élément de sécurité lisible optiquement (200) est présent dans la cible de vérification modifiée.

2. Procédé selon la revendication 1, comprenant en outre :
la détermination d'un niveau d'une caractéristique optique dans la lecture de l'élément de sécurité lisible optiquement (200), la caractéristique optique étant distincte de l'élément de sécurité lisible optiquement (200), la cible de vérification par défaut étant modifiée en fonction du niveau déterminé de la caractéristique optique.

3. Procédé selon l'une quelconque des revendications précédentes, dans lequel au moins l'un parmi une lecture, un affichage et une extraction est effectué uniquement si au moins une proportion prédéterminée de l'élément de sécurité lisible optiquement (200), par surface, est présente dans la cible de vérification modifiée.

4. Procédé selon l'une quelconque des revendications précédentes, dans lequel la cible de vérification modifiée est définie par au moins l'un des éléments suivants : une position, une orientation, une forme et une taille.

5. Procédé selon l'une quelconque des revendications 2 à 4, comprenant en outre :
la répétition de l'affichage en fonction de la caractéristique optique.

6. Procédé selon la revendication 5, comprenant en outre :
la fin du procédé si le nombre de répétitions est supérieur à un nombre prédéterminé.

7. Procédé selon l'une quelconque des revendications précédentes, comprenant en outre :
si une identité a été extraite précédemment, comparer l'identité extraite avec une identité extraite précédemment ; et
l'acceptation de la lecture de l'élément de sécurité lisible optiquement (200) uniquement si la différence entre l'identité extraite et l'identité extraite précédemment est supérieure à une différence prédéterminée.

8. Procédé selon l'une quelconque des revendications précédentes, dans lequel l'élément de sécurité lisible optiquement (200) comprend un ou plusieurs émetteurs optiques agencés pour être lus par l'intermédiaire d'un rayonnement d'émission émis à partir du ou des émetteurs optiques, et éventuellement agencés pour être excités par un rayonnement d'excitation, éventuellement à partir du dispositif de capture d'image (100).

9. Procédé selon la revendication 8 lorsqu'elle dépend de la revendication 2, dans lequel la caractéristique optique est séparée du rayonnement émis par le ou les émetteurs optiques.

10. Procédé selon l'une quelconque des revendications précédentes, comprenant en outre l'augmentation d'un affichage (154) du dispositif de capture d'image (100) avec un contenu supplémentaire pour faciliter la lecture, le contenu supplémentaire augmenté étant appliqué à un, plusieurs ou une combinaison de :
l'affichage (154), en relation avec un ou plusieurs éléments de sécurité lisibles optiquement (200), et la cible de vérification modifiée et/ou la cible de vérification par défaut ;
l'élément de sécurité lisible optiquement (200) ; et
la cible de vérification modifiée et/ou la cible de vérification par défaut.

11. Procédé selon la revendication 10, dans lequel l'augmentation déguise au moins partiellement de l'utilisateur un, plusieurs ou une combinaison de :
la lecture de l'élément de sécurité lisible optiquement (200) ;
l'affichage de la cible de vérification modifiée ; et
l'extraction de l'identité.

12. Dispositif de capture d'image (100) pour lire un élément de sécurité lisible optiquement (200), le dispositif de capture d'image (100) comprenant :
un lecteur (151) configuré pour lire l'élément de sécurité lisible optiquement (200) ;
un afficheur (154) configuré pour afficher une cible de vérification modifiée sur un viseur (120) du dispositif de capture d'image (100), la cible de vérification modifiée étant modifiée par rapport à une cible de vérification par défaut, et la cible de vérification modifiée étant configurée pour guider un utilisateur à positionner le dispositif de capture d'image (100) pour lire l'élément de sécurité lisible optiquement (200) différemment par rapport au moment où la cible de vérification par défaut est affichée ; et
une unité d'extraction (153) configurée pour extraire une identité de l'élément de sécurité lisible optiquement (200) uniquement si l'élément de sécurité lisible optiquement (200) est présent dans la cible de vérification modifiée.
